# EUROPÄISCHE PATENTSCHRIFT

(11) **EP 1 042 400 B1**
(45) Veröffentlichungstag und Bekanntmachung des Hinweises auf die Patenterteilung: **12.12.2001**
(21) Anmeldenummer: 98948956.2
(22) Anmeldetag: 10.09.1998
(51) Int. Cl.: C08K 5/521, C08G 77/18, C08G 77/08

(54) **UNTER ABSPALTUNG VON ALKOHOLEN ZU ELASTOMEREN VERNETZBARE ORGANOPOLYSILOXANMASSEN**
ORGANOPOLYSILOXANE MATERIALS WHICH CAN BE CROSS-LINKED BY CLEAVING ALCOHOLS INTO ELASTOMERS
COMPOSES D'ORGANOPOLYSILOXANE RETICULABLES PAR CLIVAGE D'ALCOOLS POUR DONNER DES ELASTOMERES

(30) Priorität: 22.12.1997 DE 19757308
(43) Veröffentlichungstag der Anmeldung: 11.10.2000
(73) Patentinhaber: Wacker-Chemie GmbH, 81737 München (DE)
(72) Erfinder: DORSCH, Norman, D-84489 Burghausen (DE); HEINRICH, Rudolf, D-84547 Emmerting (DE); SOMMER, Oswin, D-84489 Burghausen (DE); OBERNEDER, Stefan, D-84489 Burghausen (DE); HECHTL, Wolfgang, D-84489 Burghausen (DE)
(74) Vertreter: Fritz, Helmut, Dr.
(86) Internationale Anmeldenummer: EP9805777
(87) Internationale Veröffentlichungsnummer: WO9932551

(56) Entgegenhaltungen:
- EP-A- 0 763 557
- DE-C- 19 507 416
- FR-A- 2 372 203

## Beschreibung

Die Erfindung betrifft die Herstellung von mit Alkoxygruppen terminiertem Organopolysiloxan und den Einsatz dieses Organopolysiloxans als Bestandteil von RTV-1-Alkoxymassen.

Der Begriff Organopolysiloxane soll im Rahmen der vorliegenden Erfindung dimere, oligomere und polymere Siloxane umfassen.

Organopolysiloxanmassen, die unter Ausschluß von Feuchtigkeit lagerfähig sind und unter Zutritt von Feuchtigkeit bei Raumtemperatur unter Abspaltung von Alkoholen vernetzen, sog. RTV-1-Alkoxymassen, sind bereits seit langem bekannt. Sie bestehen im wesentlichen aus mit Organyloxygruppen terminiertem Organopolysiloxan, und als weiteren Bestandteilen Vernetzer mit mindestens drei hydrolysierbaren Gruppen, Katalysator und gegebenenfalls Additiven. Der Vorteil dieser RTV-1-Alkoxysysteme ist, daß sie beim Vernetzungsvorgang geruchlose, neutrale, umweltverträgliche Alkohole als Spaltprodukte freisetzen.

Mit Alkoxygruppen terminiertes Organopolysiloxan wird durch Umsetzungen von HO-terminiertem Organopolysiloxan mit Alkoxysilanen hergestellt. Dies ist beispielsweise in der US-A-4,942,211 beschrieben. Nachteilig bei diesem Verfahren ist, daß die Umsetzung bei Raumtemperatur einige Stunden benötigt. Bei erhöhter Temperatur wird zwar die Reaktionszeit verkürzt, ist aber noch so lange, daß gewartet werden muß, bis mit dem gebildeten mit Alkoxygruppen terminierten Organopolysiloxan und weiteren Bestandteilen RTV-1-Alkoxymassen hergestellt werden können.

Die Beschleunigung der Umsetzungen von HO-terminiertem Organopolysiloxan mit Alkoxysilanen durch verschiedene Katalysatoren ist bekannt. Beispielsweise wird in EP-A-763 557 die Umsetzung in Anwesenheit von sauren Dialkylphoshorsäureestern durchgeführt. Die Dialkylphosphorsäureester müssen nach der Umsetzung durch Basen desaktiviert werden, da ansonsten die mit Alkoxygruppen terminierten Organopolysiloxane depolymerisiert werden und deren Vernetzungsfähigkeit verloren geht.

Der Erfindung liegt die Aufgabe zugrunde, mit Alkoxygruppen terminiertes Organopolysiloxan für RTV-1-Alkoxymassen auf möglichst einfache Weise herzustellen.

Gegenstand der Erfindung ist ein Verfahren zur Herstellung von mit Alkoxygruppen terminiertem Organopolysiloxan, bei dem
(A) HO-terminiertes Organopolysiloxan mit
(B) Alkoxysilan der allgemeinen Formel (III)

   R⁵ _{*µ*}Si(OR⁶)₄₋_{*µ*} (III),

   worin
   - R⁵ und R⁶: einwertige, gegebenenfalls mit Fluor-, Chlor-, Brom-, C₁-C₄-Alkoxyalkyl- oder Cyanogruppen substituierte C₁-C₁₃-Kohlenwasserstoffreste und
   - *µ*: die Werte 0 oder 1 bedeuten, und/oder dessen Teilhydrolysaten, in Gegenwart von
(C) saurem Phosphorsäureester der allgemeinen Formel (I)

   (HO)ₐOP(-O-C[(CR¹ ₂)_{b}-O]_{c}(CR² ₂)_{d}-L-M) ₍₃₋ₐ₎ (I),

   umgesetzt wird, in der
   - a: die Werte 1 oder 2,
   - R¹ und R²: einen Wasserstoff-, Methyl- oder Hydroxylrest,
   - b und d: die Werte 2 oder 3,
   - c: ganzzahlige Werte von 2 bis 15,
   - L: einen Rest aus der Gruppe -O-, -COO-, -OOC-, -CONR³-, -NR⁴CO- und -CO-,
   - R³ und R⁴: einen Wasserstoff- oder C₁-C₁₀-Alkylrest und
   - M: einen einwertigen, gegebenenfalls mit Hydroxyl-, Fluor-, Chlor-, Brom-, C₁-C₁₀-Alkoxyalkyl- oder Cyanogruppen substituierten C₁- bis C₂₀-Kohlenwasserstoffrest bedeuten, mit der Maßgabe, daß die Reste R¹ und R² an jedem Kohlenstoffatom nur einmal ein Hydroxylrest sein können.

Das Verfahren läuft bereits bei Raumtemperatur mit extrem hoher Reaktionsgeschwindigkeit selektiv ab, so daß unmittelbar nach Vermischen der Komponenten (A), (B) und (C) das gebildete Alkoxygruppen terminierte Organopolysiloxan, gegebenenfalls nach Zumischung weiterer Bestandteile als RTV-1-Alkoxymasse eingesetzt werden kann. Auf eine Kontrolle, ob die Umsetzung vollständig abgelaufen ist, kann verzichtet werden.

Ein weiterer Vorteil bei diesem Verfahren ist darin zu sehen, daß dabei keine Nebenreaktionen ablaufen und beispielsweise an linearem Organopolysiloxan die Bildung von T- und Q-Einheiten nicht beobachtet wurde.

Die saurem Phosphorsäureester (C) müssen nach der Umsetzung nicht unmittelbar anschließend desaktiviert werden.

Vorzugsweise bedeutet c ganzzahlige Werte von 2 bis 10, insbesondere 2, 3, 4 oder 5.
Vorzugsweise bedeutet **L** einen Rest -O-.
Vorzugsweise bedeutet **M** einen gegebenenfalls mit C₁-C₁₀-Alkoxyalkylgruppen substituierten C₁- bis C₂₀-Kohlenwasserstoffrest, insbesondere einen unsubstituierten C₅-C₁₈-Kohlenwasserstoffrest.
Vorzugsweise bedeuten **R**^{**1**} und **R**^{**2**} einen Wasserstoffrest.
Vorzugsweise bedeuten **b** und **d** die Werte 2.

Als HO-terminiertes Organopolysiloxan (A) werden vorzugsweise lineare α,ω-Dihydroxypoly(diorganosiloxane) der allgemeinen Formel(II)

HO- [R₂SiO]ₘ-H (II),

eingesetzt, worin
- R: einwertige, gegebenenfalls mit Fluor-, Chlor-, Brom-C₁-C₄-Alkoxyalkyl- oder Cyanogruppen substituierte C₁-C₈-Kohlenwasserstoffreste bedeutet und
- m: solche Werte bedeutet, die einer Viskosität des HO-terminierten Organopolysiloxans (A) von 0,05 bis 1000 Pa.s entsprechen.

Beispiele für Kohlenwasserstoffreste R sind lineare und cylische gesättigte und ungesättigte Alkylreste, wie der Methylrest, Arylreste, wie der Phenylrest, Alkarylreste, wie Tolylreste und Aralkylreste, wie der Benzylrest.

Bevorzugt als Rest R sind unsubstituierte Kohlenwasserstoffreste mit 1 bis 6 Kohlenstoffatome, wobei der Methylrest besonders bevorzugt ist.

Die Organopolysiloxane (A) besitzen vorzugsweise eine Viskosität von 100 bis 700000 mPa.s, insbesondere von 20000 bis 350000 mPa.s, jeweils gemessen bei 23° C.

Die Teilhydrolysate von Alkoxysilan (B) sind durch Hydrolyse und Kondensation von insbesondere 2 bis 4 Alkoxysilanen entstanden. Teilhydrolysate (B) sind beispielsweise Hexamethoxydisiloxan und Hexaethoxydisiloxan.

Vorzugsweise bedeuten R⁵ und R⁶ jeweils unsubstituierte C₁-C₆-Kohlenwasserstoffreste, insbesondere Methyl-, Ethyl- und Propylreste.

Die sauren Phosphorsäureester (C) der allgemeinen Formel (I) stabilisieren die aus dem Alkoxygruppen terminierten Organopolysiloxan hergestellten RTV-1-Alkoxymassen bei der Lagerung. Insbesondere bleiben die Hautbildungszeiten der RTV-1-Alkoxymassen nahezu konstant stabil und eine Verfärbung wird unterbunden.

In den allgemeinen Formeln (I) bis (III) sind alle Reste **R, R**^{**1**} bis **R**^{**6**} sowie alle Indizes **a, b, c, d, e, m** und *µ* unabhängig voneinander gleich oder verschieden.

In allen Formeln gilt die Vierwertigkeit des Siliciumatoms. Beispielsweise ist n + o höchstens 4.

Die sauren Phosphorsäureester (C) werden bezogen auf 500 Gewichtsteile der HO-terminierten Organopolysiloxane (A) zu 0,1 bis 50 Gewichtsteilen, insbesondere zu 2 bis 20 Gewichtsteilen zugesetzt.

Die Zugabe der Alkoxysilane (B) zu den HO-terminierten Organopolysiloxanen (A) erfolgt bevorzugt in einem Überschuß was die stöchiometrischen Verhältnisse betrifft. Um die Reaktion der HO-terminierten Organopolysiloxane (A) mit Alkoxysilane (B) möglichst vollständig ablaufen zu lassen, können bevorzugt 10 bis 60 Gewichtsteile, insbesondere zu 20 bis 50 Gewichtsteile der Alkoxysilane (B) pro 500 Gewichtsteile der HO-terminierten Organopolysiloxane (A) eingesetzt werden. Der während der Reaktion nicht abreagierte Überschuß an Alkoxysilanen (B) ist in dem mit Organyloxygruppen terminiertem Organopolysiloxan und den RTV-1-Alkoxymassen nicht von Nachteil und kann deshalb im Reaktionsprodukt verbleiben. Ein Überschuß an Alkoxysilanen (B) wirkt als Vernetzerkomponente in den RTV-1-Alkoxymassen.

Die Umsetzung erfolgt vorzugsweise bei Temperaturen von +20 bis +50° C, insbesondere bei Raumtemperatur. Die Reaktionszeit beträgt abhängig vom eingesetzten Alkoxysilanen (B) 1 bis 10 Minuten.

Die Reaktionsgeschwindigkeit bei der Umsetzung richtet sich zum einen nach der Reaktivität des verwendeten Alkoxysilans (B), zum anderen nach dem sauren Phosphorsäureester (C).

Die besonders bevorzugte Umsetzungsdauer beträgt bei Raumtemperatur 2-5 min, was gerade für die Herstellung von RTV-1 Massen im Eintopfverfahren vom Vorteil ist.

Die Erfindung betrifft auch RTV-1-Alkoxymassen, welche das nach dem vorstehenden Verfahren hergestellte Reaktionsprodukt, das als wesentlichen Bestandteil mit Alkoxygruppen terminiertes Organopolysiloxan enthält, umfassen.

Zusätzlich zu den vorgenannten Komponenten können die RTV-1-Alkoxymassen weitere an sich bekannte Komponenten enthalten.

Weitere Stoffe, die vorzugsweise bei der Bereitung der RTV-1-Alkoxymassen mitverwendet werden können, sind Bis(trialkoxysilyl)C₁-C₁₂-alkane, bei denen die Alkoxyreste die Bedeutungen von OR⁶ aufweisen, beispielsweise Bis(triethoxysilyl)ethan.

Desgleichen können bei der Bereitung der RTV-1-Alkoxymassen verwendet werden Kondensationskatalysatoren, verstärkende Füllstoffe, nichtverstärkende Füllstoffe, Pigmente, lösliche Farbstoffe, Riechstoffe, Weichmacher, wie bei Raumtemperatur flüssige, durch Trimethylsiloxygruppen endblockierte Dimethylpolysiloxane oder Phosphorsäureester, Fungicide, harzartige Organopolysiloxane, einschließlich solcher aus (CH₃)₃SiO_{1/2}- und SiO_{4/2}- Einheiten, rein-organische Harze, wie Homo- oder Mischpolymerisate des Acrylnitrils, Styrols, Vinylchlorids oder Propylens, wobei solche rein-organischen Harze, insbesondere Mischpolymerisate aus Styrol und n-Butylacrylat, bereits in Gegenwart von in den endständigen Einheiten je eine Si-gebundene Hydroxylgruppe aufweisendem Diorganopolysiloxan durch Polymerisation der genannten Monomeren mittels freier Radikale erzeugt worden sein können, Korrosionsinhibitoren, Polyglykole, die verestert und/oder verethert sein können, Oxydationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit SiC-gebundenen Mercaptoalkylresten, sowie zellenerzeugende Mittel, z.B. Azodicarbonamid. Desgleichen können Haftvermittler, vorzugsweise amino-alkylfunktionelle Silane wie γ-Aminopropyltriethoxysilan, zugegeben werden.

Kondensationskatalysatoren werden vorzugsweise eingesetzt. Es können die RTV-1-Alkoxymassen erfindungsgemäß beliebige Kondensationskatalysatoren enthalten, die auch bisher in unter Ausschluß von Wasser lagerfähigen, bei Zutritt von Wasser bei Raumtemperatur zu Elastomeren vernetzenden Massen hergestellt worden sind, vorliegen konnten.

Beispiele für solche Kondensationskatalysatoren sind organische Verbindungen von Zinn, Zink, Zirkonium, Titan und Aluminium. Bevorzugt unter diesen Kondensationskatalysatoren sind Butyltitanate und organische Zinnverbindungen, wie Di-n-butylzinndiacetat, Di-n-butylzinndilaurat und Umsetzungsprodukte von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesen Umsetzungsprodukten alle Valenzen der Zinnatome durch Sauerstoffatome der Gruppierung ≡SiOSn≡ bzw. durch SnC-gebundene, einwertige organische Reste abgesättigt sind.

Vorzugsweise enthalten die RTV-1-Alkoxymassen Füllstoffe. Beispiele für Füllstoffe sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern.

Die genannten Füllstoffe können hydrophobiert sein, beispielsweise durch die Behandlung mit Organosilanen bzw. -siloxanen oder mit Stearinsäure oder durch Verätherung von Hydroxylgruppen zu Alkoxygruppen. Es kann eine Art von Füllstoff, es kann auch ein Gemisch von mindestens zwei Füllstoffen eingesetzt werden.

Bei alleiniger Verwendung von verstärkender Kieselsäure als Füllstoff können transparente RTV-1-Alkoxymassen hergestellt werden.

Für die Vernetzung der RTV-1-Alkoxymassen reicht der übliche Wassergehalt der Luft aus. Die Vernetzung kann, falls erwünscht, auch bei höheren oder niedrigeren Temperaturen als Raumtemperatur, z.B. bei -5° bis 10° C oder bei 30° bis 50° C durchgeführt werden.

Die erfindungsgemäßen RTV-1-Alkoxymassen eignen sich somit ausgezeichnet beispielsweise als Abdichtungsmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Vitrinen, sowie z.B. zur Herstellung von Schutzüberzügen, oder von gummielastischen Formkörpern sowie für die Isolierung von elektrischen oder elektronischen Vorrichtungen.

In den nachstehend beschriebenen Beispielen beziehen sich alle Angaben von Teilen mit Prozentsätzen, falls nicht anders angegeben, auf das Gewicht. Desweiteren beziehen sich alle Viskositätsangaben auf eine Temperatur von 25° C. Sofern nicht anders angegeben werden die nachstehenden Beispiele bei einem Druck der umgebenden Atmosphäre, also bei etwa 1000 hPa, und einer Raumtemperatur, also bei etwa 20° C, bei einer Temperatur, die sich beim Zusammengeben der Reaktanden bei Raumtemperatur ohne zusätzliche Heizung oder Kühlung einstellt, durchgeführt.

### Beispiele

### Beispiel 1

In einem Planetenmischer mit Vakuumausrüstung werden unter Wasserausschluß 500 g eines Dimethylpolysiloxans, das in den endständigen Einheiten je eine Hydroxylgruppe aufweist mit einer Viskosität von 80000 mPa.s bei 23°C mit 350 g eines Polydimethylsiloxans mit Trimethylsiloxygruppen in den endständigen Einheiten einer Viskosität von 100mm²/s (23°C) und 10 g Gemisch an alkoxylierten Phosphorsäureestern der Formeln

(OH)₁PO[(OCH₂CH₂)₃₋₄-O-(CH₂)₁₁₋₁₄-CH₃]₂

und

(OH)₂PO[(OCH₂CH₂)₃₋₄-O-(CH₂)₁₁₋₁₄-CH₃]₁

vermischt.
Unmittelbar darauf fügt man in einem 25 g Methyltrimethoxysilan zu und homogenisiert im Vakuum 5 Minuten. Danach setzt man unter Beibehaltung der für RTV-1 Massen übliche Mischtechnik in der angegebenen Reihenfolge zu:
- 13,5 g: γ-Aminopropyltriethoxysilan,
- 80,0 g: pyrogene, hydrophile Kieselsäure mit einer Oberfläche von 150 m²/g nach BET und
- 5,0 g: eines Umsetzungsprodukts, das durch 6-stündiges Erhitzen eines Gemisches aus 4 Teilen Tetraethylsilikat und 2,2 Teilen Di-n-butylzinndiacetat auf 120°C beim Druck der umgebenden Atmosphäre unter Rühren und gleichzeitigem Abdestillieren des entstandenen Essigsäureethylesters hergestellt wurde.

Nach Homogenisierung im Vakuum wird der Compound in feuchtigkeitsdichte Gebinde abgefüllt. Nach verschiedenen Zeiträumen werden Proben entnommen und die Hautbildungszeiten (bei 23°C/50% relative Luftfeuchtigkeit) der daraus hergestellten Elastomere bestimmt. Die dabei erzielten Ergebnisse sind in Tabelle 1 aufgeführt.

Folgende mechanischen Eigenschaften der Elastomere wurden bestimmt:
Shore A: 10; Reißfestigkeit: 1,0 N/mm² ; Reißdehnung: 560%;
Weiterreißwiderstand: 2,7 N/mm;
Spannungswert bei 100% Dehnung: 0,2 N/mm² .

### Beispiel 2

Es wird anolog Beispiel 1 vorgegangen. Zu 600 g α,ω-Dihydroxypolydimethylsiloxan von Beispiel 1 werden folgende Ingredienzien in der angegebenen Reihenfolge zugemischt:
- 280,0 g: Polydimethylsiloxan mit -Si(CH₃)₃-Endgruppen
- 10,0 g: alkoxylierter Phosphorsäureester von Beispiel 1
- 25,0 g: Vinyltrimethoxysilan,
- 15,0 g: γ-Aminopropyltriethoxysilan,
- 70,0 g: pyrogene, hydrophile Kieselsäure mit einer Oberfläche von 150 m²/g nach BET und
- 5,0 g: des Umsetzungsprodukts aus Tetraethylsilikat und Di-n-butylzinndiacetat von Beispiel 1.

Die Hautbildungszeiten der daraus hergestellten Elastomere sind in Tabelle 1 aufgeführt.

### Beispiel 3

Es wird anolog Beispiel 1 vorgegangen. Zu 500 g α,ω-Dihydroxypolydimethylsiloxan werden folgende Ingredienzien in der angegebenen Reihenfolge zugemischt:
- 380,0 g: Polydimethylsiloxan mit-Si(CH₃)₃-Endgruppen
- 10,0 g: alkoxylierter Phosphorsäureester von Beispiel 1
- 25,0 g: Methyltrimethoxysilan,
- 10,0 g: 3-(2-Aminoethylamino)-propyltrimethoxysilan,
- 70,0 g: pyrogene, hydrophile Kieselsäure mit einer Oberfläche von 150 m²/g nach BET und
- 4,0 g: des Umsetzungsprodukts aus Tetraethylsilikat und Di-n-butylzinndiacetat von Beispiel 1.

Die Hautbildungszeiten der daraus hergestellten Elastomere sind in Tabelle 1 aufgeführt.

### Beispiel 4

Es wird analog Beispiel 1 vorgegangen. Es werden vermischt:
- 500,0 g: α,ω - Dihydroxypolydimethylsiloxan von Beispiel 1
- 380,0 g: Polydimethylsiloxan mit -Si(CH₃)₃-Endgruppen
- 10,0 g: alkoxylierter Phosphorsäureester von Beispiel 1
- 25,0 g: Methyltrimethoxysilan,
- 8,0 g: γ-Aminopropyltriethoxysilan,
- 70,0 g: pyrogene, hydrophile Kieselsäure mit einer Oberfläche von 150 m²/g nach BET und
- 4,0 g: des Umsetzungsprodukts aus Tetraethylsilikat und Di-n-butylzinndiacetat von Beispiel 1.

Die Hautbildungszeiten der daraus hergestellten Elastomere sind in Tabelle 1 aufgeführt.

### Beispiel 5

Es wird anolog Beispiel 1 vorgegangen. Es werden vermischt:
- 500,0 g: α,ω - Dihydroxypolydimethylsiloxan von Beispiel 1
- 380,0 g: Polydimethylsiloxan mit -Si(CH₃)₃-Endgruppen
- 10,0 g: alkoxylierter Phosphorsäureester von Beispiel 1
- 25,0 g: Vinyltrimethoxysilan,
- 25,0 g: aminofunktionelles Siloxan: Äquilibrierungsprodukt aus Aminopropyltriethoxysilan und einem Kondensat/Hydrolysat aus Methyltriethoxysilan mit einer Aminzahl von 2,2,
- 70,0 g: pyrogene, hydrophile Kieselsäure mit einer Oberfläche von 150 m²/g nach BET und
- 5,0 g: des Umsetzungsprodukts aus Tetraethylsilikat und Di-n-butylzinndiacetat von Beispiel 1.

Die Hautbildungszeiten der daraus hergestellten Elastomere sind in Tabelle 1 aufgeführt.

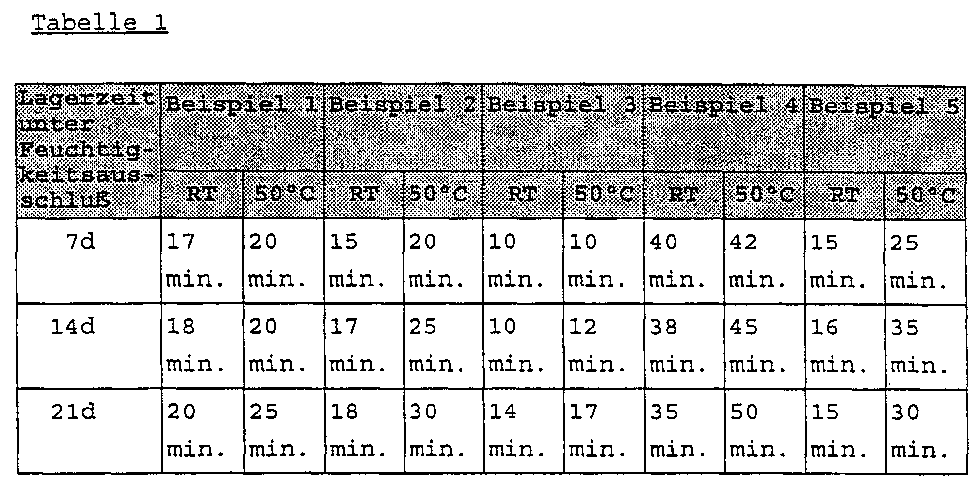

### Beispiel 6:

In einem Planetenmischer mit Vakuumausrüstung werden unter Wasserausschluß 600g eines Polydimethylsiloxans, in den endständigen Einheiten je eine Hydroxylgruppe aufweisend und mit einer Viskosität von 80 000 mPa.s bei 23 °C, 300g eines Polydimethylsiloxans mit Trimethylsiloxygruppen als endständige Einheiten und mit einer Viskosität von 100 mm²/s bei 23°C sowie 10g des alkoxylierten Phosphorsäureesters von Beispiel 1 homogen vermischt.
Unmittelbar darauf fügt man 35g Methyltrimethoxysilan zu und homogenisiert nochmal 5 Minuten. Dann setzt man dieser Vormischung unter Beibehaltung der für RTV-1 Massen üblichen Mischtechnik in Schritten folgende Ingredienzien nacheinander zu:
- 15,0 g: γ-Aminopropyltriethoxysilan,
- 70,0 g: pyrogene, hydrophile Kieselsäure mit einer spezifischen Oberfläche von 150 m²/g nach BET und
- 5,0 g: des Umsetzungsprodukts aus Tetraethylsilikat und Di-n-butylzinndiacetat von Beispiel 1.

Nach Homogenisierung unter vermindertem Druck wird der Compound in feuchtigkeitsdichten Gebinden abgefüllt. Nach 1-tägiger Lagerung bei Raumtemperatur wird eine Hautbildungszeit von 10 Minuten (23°C/50% relative Luftfeuchtigkeit) bestimmt.
Nach zusätzlicher 7-tägiger Lagerung bei 50°C resultiert eine Hautbildungszeit von 15 Minuten.

### Beispiel 7:

Das Beispiel 6 wird wiederholt. In die Vormischung derselben Zusammensetzung werden die weiteren Ingredienzien jedoch in abgeänderter Reihenfolge zugesetzt:
- 70,0 g: pyrogene, hydrophile Kieselsäure mit einer spezifischen Oberfläche von 150 m²/g nach BET,
- 15,0 g: γ-Aminopropyltriethoxysilan und
- 5,0 g: des Umsetzungsprodukts aus Tetraethylsilikat und Di-n-butylzinndiacetat von Beispiel 1.

Nach Homogenisierung unter vermindertem Druck wird der Compound in feuchtigkeitsdichten Gebinden abgefüllt. Nach 1-tägiger Lagerung bei Raumtemperatur wird eine Hautbildungszeit von 12 Minuten (23°C/50% relative Luftfeuchtigkeit) bestimmt.
Nach zusätzlicher 7-tägiger Lagerung bei 50°C resultiert eine Hautbildungszeit von 15 Minuten.

### Beispiel 8:

Beispiel 6 wird wiederholt. In die Vormischung derselben Zusammensetzung werden die weiteren Ingredienzien folgendermaßen zugesetzt:
- 70,0 g: pyrogene, hydrophile Kieselsäure mit einer spezifischen Oberfläche von 150 m²/g nach BET und
- 5,0 g: des Umsetzungsprodukts aus Tetraethylsilikat und Di-n-butylzinndiacetat von Beispiel 1.

Nach Homogenisierung unter vermindertem Druck läßt man den Compound 3 Stunden unter Feuchtigkeitsausschluß lagern und mischt anschließend 15g γ-Aminopropyltriethoxysilan ein. Nach nochmaliger Homogenisierung unter vermindertem Druck wird der Compound in feuchtigkeitsdichten Gebinden abgefüllt. Nach 1-tägiger Lagerung bei Raumtemperatur wird eine Hautbildungszeit von 12 Minuten (23°C/
50% relative Luftfeuchtigkeit) bestimmt. Nach zusätzlicher 7-tägiger Lagerung bei 50°C resultiert eine Hautbildungszeit von 15 Minuten.

Beispiele 6 bis 8 zeigen, daß die Reihenfolge der Zugabe des Haftvermittlers γ-Aminopropyltriethoxysilan einen vernachlässigbaren Einfluß auf die Hautbildungszeit ausübt. Die sofortige Neutralisation des alkoxylierten Phosphorsäureesters durch den basischen Haftvermittler ist somit nicht notwendig.

### Beispiel 9:

In einem Planetenmischer mit Vakuumausrüstung werden unter Wasserausschluß 550g eines Polydimethylsiloxans mit endständigen Hydroxylgruppen und einer Viskosität von 80 000 mPa.s bei 23°C, 325g eines Polydimethylsiloxans mit endständigen Trimethylsiloxygruppen, 50g Methyltrimethoxysilan und 10g des alkoxylierten Phosphorsäureesters von Beispiel 1 homogen vermischt. Nach ca. 10 Minuten setzt man folgende Ingredienzien zu und mischt diese homogen in die Gesamtmasse ein:
- 15,0 g: γ-Aminopropyltriethoxysilan,
- 73,0 g: pyrogene, hygrophile Kieselsäure mit einer Oberfläche von 150 m²/g nach BET,
- 5,0 g: des Umsetzungsprodukts aus Tetraethylsilikat und Di-n-butylzinndiacetat von Beispiel 1 und
- 200,0 g: gemahlene, stearinsäurebehandelte Kreide.

Nach 1-tägiger Lagerung bei Raumtemperatur wird eine Hautbildungszeit von 15 Minuten bestimmt.
Nach zusätzlicher 7-tägiger 50°C-Lagerung wurde eine Hautbildungszeit von 20 Minuten bestimmt.

### Beispiel 10:

Beispiel 9 wurde wiederholt, jedoch mit der Abänderung, daß anstelle der gemahlenen, stearinsäurebehandelten Kreide dieselbe Menge an gemahlener, unbehandelter Kreide verwendet wurde.
Nach 1-tägiger Lagerung bei Raumtemperatur wurde eine Hautbildungszeit von 20 Minuten, nach zusätzlicher 7-tägiger 50°C-Lagerung wurde eine Hautbildungszeit von 25 Minuten bestimmt.

### Beispiel 11:

Beispiel 9 wurde wiederholt, jedoch mit der Abänderung, daß anstelle von 73g pyrogener, hydrophiler Kieselsäure mit einer Oberfläche von 150 m²/g nach BET nur 50g eingemischt wurden und daß anstelle von 200g gemahlener, stearinsäurebehandelter Kreide die gleiche Menge an gefällter, stearinsäurebehandelter Kreide mit einer Oberfläche von 19m²/g verwendet wurde.
Nach 1-tägiger Lagerung bei Raumtemperatur wurde eine Hautbildungszeit von 15 Minuten bestimmt, nach zusätzlicher 7-tägiger Lagerung bei 50°C betrug die Hautbildungszeit 25 Minuten.

### Beispiel 12

Es wird analog Beispiel 1 vorgegangen. Es werden in folgender Reihenfolge vermischt:
- 95,3 g: α,ω - Dihydroxypolydimethylsiloxan von Beispiel 1
- 1,2 g: alkoxylierter Phosphorsäureester von Beispiel 1 und
- 3,5 g: Methyltrimethoxysilan.

Die Viskositäten der Mischung wurden vermessen:

Die Viskositäten der Mischung wurden vermessen:
nach 1 h 64000 mPas
nach 2 h 62400 mPas
nach 3 h 60800 mPas

### Beispiel 13 (Vergleichsbeispiel)

Es wird analog Beispiel 1 vorgegangen. Es werden in folgender Reihenfolge vermischt:
- 95,3 g: α,ω - Dihydroxypolydimethylsiloxan von Beispiel 1
- 1,2 g: Di-2-ethylhexylphosphat (gemäß EP-A-763 557) und
- 3,5 g: Methyltrimethoxysilan,

Die Viskositäten der Mischung wurden vermessen:
nach 1 h 32000 mPas
nach 2 h 12000 mPas
nach 3 h 2000 mPas

Di-2-ethylhexylphosphat depolymerisiert das Alkoxygruppen terminierte Organopolysiloxan.

## Patentansprüche

1. Verfahren zur Herstellung von mit Alkoxygruppen terminiertem Organopolysiloxan, bei dem
(A) HO-terminiertes Organopolysiloxan mit
(B) Alkoxysilan der allgemeinen Formel (III)
R⁵ _{µ}Si(OR⁶)₄₋_{*µ*} (III),
worin
**R**^{**5**} **und R**^{**6**} einwertige, gegebenenfalls mit Fluor-, Chlor-, Brom-, C₁-C₄-Alkoxyalkyl- oder Cyanogruppen substituierte C₁-C₁₃-Kohlenwasserstoffreste und
*µ* die Werte 0 oder 1 bedeuten,
und/oder dessen Teilhydrolysaten, in Gegenwart von
(C) saurem Phosphorsäureester der allgemeinen Formel (I)
(HO)ₐOP(-O-[(CR¹ ₂)_{b}-O]_{c}(CR² ₂)_{d}-L-M) ₍₃₋ₐ₎ (I),
umgesetzt wird, in der
**a** die Werte 1 oder 2,
**R**^{**1**} **und R**^{**2**} einen Wasserstoff-, Methyl- oder Hydroxylrest,
**b und d** die Werte 2 oder 3,
**c** ganzzahlige Werte von 2 bis 15,
**L** einen Rest aus der Gruppe -O-, -COO-, -OOC-, -CONR³-, -NR⁴CO- und -CO-,
**R**^{**3**} **und R**^{**4**} einen Wasserstoff- oder C₁-C₁₀-Alkylrest und
**M** einen einwertigen, gegebenenfalls mit Hydroxyl-, Fluor-, Chlor-, Brom-, C₁-C₁₀-Alkoxyalkyl- oder Cyanogruppen substituierten C₁- bis C₂₀-Kohlenwasserstoffrest bedeuten, mit der Maßgabe, daß die Reste R¹ und R² an jedem Kohlenstoffatom nur einmal ein Hydroxylrest sein können.

2. Verfahren nach Anspruch 1, bei dem als HO-terminiertes Organopolysiloxan (A) lineare α,ω-Dihydroxypoly(diorgano)siloxane der allgemeinen Formel (II)
HO- [R₂SiO]ₘ-H (II),
eingesetzt werden, worin
**R** einwertige, gegebenenfalls mit Fluor-, Chlor-, Brom-C₁-C₄-Alkoxyalkyl- oder Cyanogruppen substituierte C₁-C₈-Kohlenwasserstoffreste bedeutet und
**m** solche Werte bedeutet, die einer Viskosität des HO-terminierten Organopolysiloxans (A) von 0,05 bis 1000 Pa.s entsprechen.

3. RTV-1-Alkoxymassen, welche das gemäß Anspruch 1 oder 2 erhältliche Reaktionsprodukt, das als wesentlichen Bestandteil mit Alkoxygruppen terminiertes Organopolysiloxan enthält, umfassen.

## Claims

1. A process for preparing alkoxy-terminated organopolysiloxane, in which
(A) HO-terminated organopolysiloxane is reacted with
(B) alkoxysilane of the general formula (III)
R⁵ _{µ}Si(OR⁶)₄₋_{*µ*} (III)
where
R⁵ and R⁶ are monovalent, unsubstituted or fluorine-, chlorine-, bromine-, C₁-C₄-alkoxyalkyl- or cyano- substituted C₁-C₁₃-hydrocarbon radicals, and
*µ* is 0 or 1,
and/or its partial hydrolysates, in the presence of
(C) acid phosphoric ester of the general formula (I)
(HO)ₐOP(-O-[(CR¹ ₂)_{b}-O]_{c}[(CR² ₂)_{d}]ₑ-L-M)₍₃₋ₐ₎ (I),
where
a is 1 or 2,
R¹ and R² are a hydrogen radical, methyl radical or hydroxyl radical,
b and d are 2 or 3,
c is an integer from 2 to 15,
e is 0 or 1
L is a radical selected from the class consisting of -O-, -COO-, -OOC-, -CONR³-, -NR⁴CO- and -CO-,
R³ and R⁴ are a hydrogen radical or C₁-C₁₀-alkyl radical, and
M is a monovalent, unsubstituted or hydroxyl-, fluorine-, chlorine-, bromine-, C₁-C₁₀-alkoxyalkyl- or cyano-substituted C₁-C₂₀-hydrocarbon radical, with the proviso that on any carbon atom only one radical R¹ and R² may be a hydroxyl radical.

2. A process as claimed in claim 1, in which the HO-terminated organopolysiloxane (A) used comprises linear α,ω-dihydroxypoly(diorgano)siloxanes of the general formula (II)
HO-[R₂SiO]ₘ-H (II),
where
R is a monovalent, unsubstituted or fluorine-, chlorine-, bromo-C₁-C₄-alkoxyalkyl- or cyano-substituted C₁-C₈-hydrocarbon radical, and
m has a value which corresponds to a viscosity of the HO-terminated organopolysiloxane (A) of from 0.05 to 1000 Pa.s.

3. Alkoxy RTV1 compositions which comprise the reaction product obtainable as claimed in claim 1 or 2, in which alkoxy terminated organopolysiloxane is a substantial constituent.

## Revendications

1. Procédé pour la préparation d'un organopolysiloxane présentant des groupements terminaux alkoxy, dans lequel
(A) un organopolysiloxane à terminaisons OH est transformé avec
(B) un alkoxysilane de formule générale (III)
R⁵ _{µ}Si(OR⁶)_{4-µ} (III),
dans laquelle
R⁵ et R⁶ signifient des radicaux hydrocarbonés en C₁-C₁₃ monovalents, le cas échéant substitués par des groupements fluor, chlore, brome, (alkoxyle en C₁-C₄) alkyle ou cyano
µ signifie les valeurs 0 ou 1,
et/ou avec ses hydrolysats partiels, en présence d'un
(C) ester acide d'acide phosphorique de formule générale (I)
(HO)ₐOP(-O-[(CR¹ ₂)_{b}-O]_{c}(CR² ₂)_{d}-L-M) ₍₃₋ₐ₎ (I),
dans laquelle
a signifie les valeurs 1 ou 2
R¹ et R² signifient un radical hydrogène, méthyle ou hydroxyle
b et d signifient les valeurs 2 ou 3
c signifie des valeurs en nombre entier de 2 à 15
e signifie les valeurs 0 ou 1
L signifie un radical parmi le groupe -O-, -COO-, -OOC-, -CONR³-, -NR⁴CO- et -CO-
R³ et R⁴ signifient un hydrogène, un radical alkyle en C₁-C₁₀ et
M signifie un radical hydrocarboné en C₁ à C₂₀, monovalent, le cas échéant substitué par des groupements hydroxyle, fluor, chlore, brome, (alkoxy en C₁-C₁₀) - alkyle ou cyano,
sous réserve que les radicaux R₁ et R₂ sur chaque atome de carbone ne puissent être qu'une fois un radical hydroxyle.

2. Procédé selon le revendication 1, dans lequel on utilise en tant qu'organopolysiloxane (A) à terminaisons OH des α,ω- dihydropoly(diorgano)siloxanes linéaires de formule générale (II)
HO-[R₂SiO]ₘ-H (II),
dans laquelle
R signifie des radicaux hydrocarbonés en C₁-C₈, monovalents, le cas échéant substitués par des groupements fluor, chlore, brome, (alkoxy en C₁-C₄)-alkyle ou cyano et
m signifie ces valeurs qui correspondent à une viscosité de l'organopolysiloxane (A) à terminaisons OH de 0,005 à 1000 Pa.s

3. Masses RTV-1 à base d'alkoxy,
lesquelles comprennent le produit réactionnel pouvant être obtenu selon la revendication 1 ou 2, qui contient comme composant essentiel un organopolysiloxane présentant des groupements terminaux alkoxy.
